# EUROPEAN PATENT SPECIFICATION

(11) **EP 3 272 645 B1**
(45) Date of publication and mention of the grant of the patent: **19.09.2018**
(21) Application number: 16180376.2
(22) Date of filing: 20.07.2016
(51) Int. Cl.: B64C 1/18, B62D 25/20, B64D 17/10, B61D 17/10

(54) **FLOOR ASSEMBLY FOR A TRANSPORTATION MEANS, TRANSPORTATION MEANS SECTION, AND TRANSPORTATION MEANS**
BODENANORDNUNG FÜR EIN TRANSPORTMITTEL, TRANSPORTMITTELABSCHNITT UND TRANSPORTMITTEL
ENSEMBLE DE PLANCHER POUR MOYEN DE TRANSPORT, SECTION DE MOYEN DE TRANSPORT ET MOYEN DE TRANSPORT

(43) Date of publication of application: 24.01.2018
(73) Proprietor: Airbus Operations GmbH, 21129 Hamburg (DE)
(72) Inventor: Röpke, Stephan, 21129 Hamburg (DE); Telgkamp, Jens, 21129 Hamburg (DE); Roth, Ingo, 21129 Hamburg (DE); Raufeisen, Stefan, 21129 Hamburg (DE)
(74) Representative: Schicker, Silvia

(56) References cited:
- WO-A1-2013/074082
- FR-A1- 2 617 785
- FR-A1- 2 957 050

## Description

The present invention concerns a floor assembly for a transportation means, a transportation means section having the floor assembly, as well as a transportation means having the floor assembly and/or the transportation means section.
Modern transportation means, such as aircraft or trains, may be configured for transporting freight and passengers at the same time. Therefore, space within transportation means available for transporting is typically divided into a passenger compartment and a freight/cargo hold by a cabin floor, to whose underside system components, such as electric cables and fluid guiding lines, can be mounted. Examples of aircraft cabin floors are described in documents DE 10 2007 062 111 A1 and DE 10 2005 045 181.

Further technical background is also known from FR 2957050, WO 2013074082 A1 and FR 2617785, which refer to floor assemblies. Typically, an aircraft cabin floor comprises of a plurality of floor panels, which are each attached to traverses, also referred to as cross-beams, extending below the floor panels transversally through the entire aircraft body, e.g. by means of a screw connection. In order to transmit load acting upon the floor panels due to the weight of the passengers and/or aircraft interior components to the aircraft structure, the cross-beams are rigidly fixed to one or more structural parts of the aircraft, such as to ribs and/or stringers, extending transversally or longitudinally relative to the aircraft fuselage longitudinal axis.
The present invention is directed to the object to provide a floor assembly which is space-efficient and has a high stiffness. Furthermore, the invention is directed to the object to provide a transportation means section having such floor assembly, and a transportation means having the transportation means section and/or the floor assembly.
This problem is solved by a floor assembly having the features of claim 1, a transportation means section according to claim 13, and a transportation means according to claim 15.

The floor assembly is provided for a transportation means such as an aircraft or a train, and comprises a flat floor panel having a central layer through the entirety of which a central plane of the central layer extends. The central layer connects a first surface layer arranged on a first surface of the central layer and a second surface layer arranged on a second surface of the central layer. The cross-sectional area of the central layer in the central plane may be larger than any of the cross-sectional areas of the first and/or the second surface layer in a plane perpendicular to the central plane. Moreover, the floor assembly comprises a supporting structure adapted to be fixed to a structural part of the transportation means, and an elongate connecting device extending in a first direction. The connecting device is itself fixed to the supporting structure and is adapted for detachably mounting the floor panel to the supporting structure. When the floor panel is in its mounted state in which it is mounted to the supporting structure, the first direction is parallel to the central plane, and the connecting device stands in engagement with the central layer of the floor panel and abuts at least in sections against at least a portion of an outer lateral surface of the floor panel.

Preferably, the connecting device has a substantially J-shaped / hook-shaped cross-section in a first plane that is perpendicular to the first direction. For example, the connecting device may comprise an extruded J-shaped profile, e.g., made of metal such as aluminum. In the mounted state, i.e. when the floor panel is mounted to the connecting device, the profile is aligned such that its short limb (hook-tip portion) is closer to the center of the floor panel than its long limb. In other words, the connecting device may comprise a first limb and a second limb which extends in parallel to the first limb. In this case, the first and the second limb are connected by a base part which extends perpendicularly to the first and the second limb. When the floor panel is in its mounted state, the first limb may abut against at least a portion of the outer lateral surface of the floor panel, and the second limb may engage into the central layer. The base portion may abut against the second surface of the central layer. Thereby, the floor panel, particularly the central layer thereof in its peripheral portion proximate to the outer lateral surface, is fixedly secured to the connecting device against displacement in parallel to the central plane. Optionally, a part of the peripheral portion may be clamped between the first and the second limb of the connecting device. Furthermore, it is conceivable that the connecting device, at least at its surfaces contacting the floor panel, is coated with a damping material, such as a rubber.

In the floor panel, a groove may be formed preferably complementary to the second limb such as to form-fittingly receive the second limb. For example, the groove may be milled into the central layer. In particular, the groove may have a cross-section that is substantially U- or V-shaped and that extends from the second surface into the central layer, advantageously in the peripheral portion. Accordingly, the width of the base portion essentially corresponds to the distance between the outer lateral surface and the groove, and/or the depth of the groove is approximately the length of the second limb in a direction perpendicular to the central plane. Optionally, if a second surface layer is formed in the peripheral portion, the second surface layer may cover at least a portion of an inner surface of the groove. Moreover, it is conceivable that an elongate insert, e.g. made of a metal material such as aluminum, is fixed inside the groove such that its outer surface faces the inner surface of the groove. This insert preferably extends in parallel to the outer lateral surface, thus, in the groove in the first direction. Optionally, the insert may be rigidly fixed to the groove, e.g., to the inner surface thereof. If an insert is present, the inner surface thereof is formed such as to correspond with the second limb.

In order to attach the floor panel to the connecting device, the floor panel is aligned such that a projection of the connecting device, particularly the second limb, is below the groove formed in the floor panel. Subsequently, the floor panel is pressed down such that the projection engages into the groove. To detach the floor panel from the connecting device, this process is inverted: The floor panel is lifted so that the projection disengages from the groove. Thus, the panel can be handled freely within the transportation means or transported out of the transportation means through a door.

The central layer may have a honeycomb structured core with a plurality of cells delimited by parallel cell walls. Each of the cell walls may cross the central plane. For example, each of the cells may be formed such as to have a hexagonal basis or cross-section in the central plane. In particular, the honeycomb structured core may extend over the entire central layer of the floor panel, e.g., from the aforementioned outer lateral wall to another outer lateral wall on an opposite side of the floor panel. Each of the cells may be closed at the first and/or the second surface of the central layer by the first/second surface layer, which may be formed at least in sections integrally with the cell walls. The cell walls may be formed by a metal material such as aluminum. Additionally, it is conceivable that the cells are covered on the first and/or second surface by an additional cover layer made of the same material as the cell walls.

Moreover, the floor assembly may comprise at least one seat rail which is arranged such as to penetrate through the first surface layer and into the central layer. The seat rail preferably extends in the first direction. For example, the seat rail may comprise a seat holding portion, which has a substantially C-shaped cross-section in a plane perpendicular to the first direction with its open surface facing away from the central plane, and an anchor portion attached to the seat holding portion at its surface opposite of the open surface. The latter surface may contact the first surface of the central layer without penetrating into the central layer, and the anchor portion may be arranged within the central layer. Moreover, the anchor portion may be fixed to the central layer, e.g., by an adhesive or press-fitting. If the seat rail does not penetrate into the central layer, but is embedded in the first surface layer, it preferably lacks an anchor portion.

The first and/or the second surface layer may comprise a peripheral layer formed of a composite material and an intermediate layer formed of a foam material and arranged between the peripheral layer and the central layer. Accordingly, the peripheral layer is formed rigidly such as to prevent damage of the intermediate layer and/or the central layer, whereas the intermediate layer is more elastic than the peripheral layer such as to damp any impact on the floor panel. For example, the peripheral layer may be formed of a carbon fiber reinforced plastic material, whereas the intermediate layer may be formed of hard foam preferably admitted for aircraft production.

In the first and/or in the second surface layer, one or more threaded bushings may be formed. These bushings extend essentially perpendicularly to the first and/or the second surface of the central layer through the peripheral layer, and optionally through the intermediate layer. Bushings on the first surface are provided for mounting transportation means interior components, e.g. aircraft monuments, whereas bushings on the second surface are provided for mounting system components, such as electric cables or hoses/lines for liquid supplies, to the floor assembly. Accordingly, the bushings have internal threads into which bolts for mounting the respective components may engage. Thus, the components may be simply and flexibly fixed to the floor assembly.

The supporting structure may further comprise a plurality of traverses spaced apart from each other for fixing the floor assembly to the transportation means body. In particular, a first and a second traverse may be formed separate from the floor panel and rigidly fixed to the connecting device. Each of the traverses may extend from the connecting device in a second direction which is perpendicular to the first direction. When the floor panel is in its mounted state, the central plane of the central layer preferably extends in parallel to the second direction and the first traverse and the second traverse are arranged offset relative to the floor panel in the second direction. In other words, when viewed in a direction perpendicular to the central plane, the floor panel and each of the traverses are free of an overlap. Rather, in this view, at least a part of the connecting device, e.g. the first limb, is arranged between the floor panel and each traverse. Furthermore, it is conceivable that the space between two neighboring traverses is covered by detachable panels, such as panels for rapid decompression of an aircraft cabin.

In a further embodiment, the floor assembly comprises a strut having an S-shaped cross-section in a second plane that is parallel to the first and the second direction. At its opposite ends in the first direction, the strut may be rigidly fixed to the first and to the second traverse, respectively. Thereby, longitudinal forces acting in the first direction on one of these traverses is effectively transmitted via the strut to the neighboring traverse. Moreover, the supporting structure may comprise a support rod extending in a third direction that may be perpendicular to the first and the second direction. The support rod may be fixed to the connecting device, particularly to the base part thereof, and may be adapted to be fixed to the structural part. When the floor panel is in its mounted state, the third direction is perpendicular to the central plane of the central layer, and the support rod is arranged offset relative to the floor panel in the third direction.

The central layer of the floor panel may have a thickness of at least 4 cm, preferably at least 4.5 cm. The thickness may even be at least 5 cm to allow for improved stability. The first and/or the second surface layer may have a thickness of at most 1.5 cm, at most 2.5 cm or at most 3.5 cm. Preferably the thickness of at least one of these surface layers is about 2.5 cm. The peripheral layer may be substantially thinner than the intermediate layer. Moreover, the floor panel may have a length of at least 45 cm, and/or a width of at least 1.5 m. Preferably, the length of the floor panel is about 50 to 60 cm and the width of the floor panel is about 3 m. Thus, the floor assembly may extend in the second direction over the entire width of the transportation means in which the floor is to be arranged.

In the present context, the terms length, width and thickness (of the floor panel) refer to the size in the first, second, and third direction, respectively, in the mounted state of the floor panel.

A transportation means section, particularly an aircraft section or a train section, comprises at least one floor assembly described above in details, and a plurality of structural parts spaced apart in the first and/or the second direction. At least some of the structural parts are preferably ribs or stringers of the transportation means. Each structural part may have a curved, e.g. C-shaped, cross-section in a plane that is perpendicular to the first direction. The supporting structure is attached to each of the structural parts, and, when the floor panel is in its mounted state, the length of the floor panel in the first direction corresponds at least to the distance between two neighboring structural parts, e.g. neighboring ribs, in the first direction. Preferably, the connecting device comprises two portions arranged on opposite outer lateral surfaces of the floor panel. Each of these parts extends in the first direction from its associated first traverse to its associated second traverse, and is, thus, as long as the floor panel.

The transportation means section may comprise further floor assemblies described above, which may be arranged adjacent to the above described floor assembly and have one or more of the features of the same. In particular, adjacent floor assemblies may be fixed to each other on end surfaces of their floor panels in and opposite of the first direction by means of tongue and groove connections. In any case, when the floor panel is in its mounted state, it is preferably suspended to the structural part only by the supporting structure and the connecting device. Thus, the floor assembly does not require cross-beams that run below the floor panels. Rather the combination of the hereinabove described components result in a self-supporting transportation means floor.

A transportation means, particularly an aircraft or a train, comprises a transportation means section and/or a floor assembly as described hereinabove.

Preferred embodiments of a floor assembly and a transportation means section are described in greater detail with reference to the attached schematic drawings in the following, wherein
- Figure 1: shows a perspective view of a floor assembly in its mounted state as viewed in the first direction,
- Figure 2: shows a detailed perspective view of an area A marked in Fig. 1 in the region of an outer lateral surface of the floor panel,
- Figure 3: shows a detailed perspective view of an area B marked in Fig. 1 in the region of a guiding rail of the floor assembly,
- Figure 4: shows a detailed perspective view of an area C marked in Fig. 1 in the region of a bushing arranged on the first surface of the floor assembly,
- Figure 5: shows a detailed perspective view of an area D marked in Fig. 1 in the region of a bushing arranged on the second surface of the floor assembly, and
- Figure 6: shows a perspective view of a transportation means section, wherein the floor assembly is in its mounted state, and the viewing direction is the first direction.

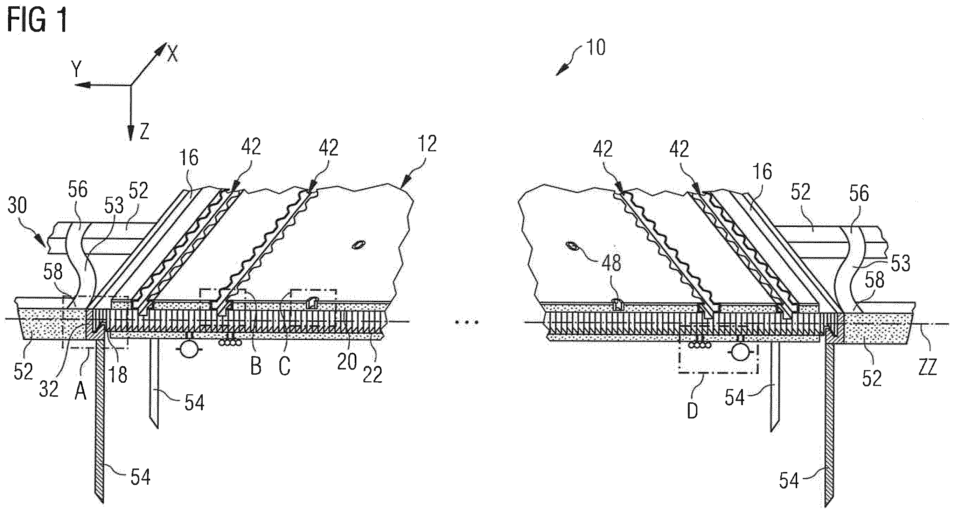

A floor assembly 10 for a transportation means is shown in Figs. 1 to 5. The transportation means is exemplarily an aircraft. In the figures, a central region of the floor assembly 10 is omitted. Moreover, in the following, only the half of the floor assembly 10 shown in Fig. 1 to the left will exemplarily be described. The right half of the floor assembly 10 shown in Fig. 1 is configured like the left half, but mirrored on an imaginary vertical plane extending through the center of Fig. 1.

The floor assembly 10 comprises a floor panel 12 having a central layer 14 through which a central plane ZZ of the central layer 14 extends. The central layer 14 comprises a first surface 16 and a second surface 18 on two opposite sides of the central layer 14. Each of the first surface 16 and the second surface 18 are parallel to the central plane ZZ. A first surface layer 20 covers a partial area of the first surface 16, and a second surface layer 22 covers the same partial area of the second surface 18 of the central layer 14. Thus, the first surface layer 20 is formed on and in direct contact with the first surface, and the second surface layer 20 is formed on and in direct contact with the second surface 18, so that the central layer 14 interconnects the first and the second surface layer 20, 22.

A supporting structure 30 is formed laterally in the proximity of the floor panel 12 and provided for fixing the floor panel 10 to a structural part (not shown) of the transportation means. To the supporting structure 30, a connecting device 32 is fixed to enable detachably mounting the floor panel 12 to the supporting structure 30.

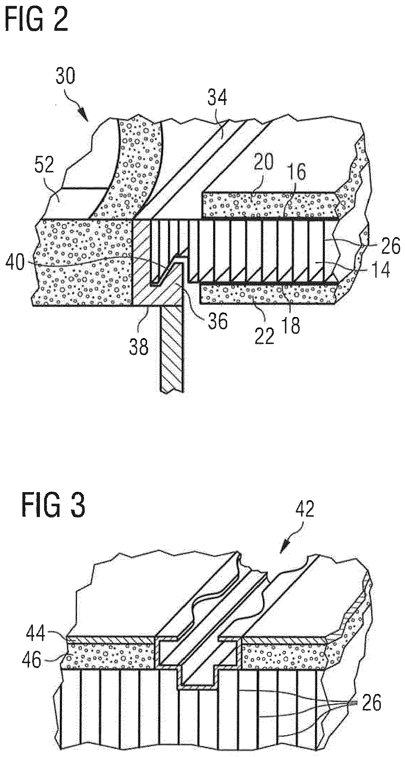

The connecting device 32 extends in a first direction X and is formed as a J-profile which has a J-shaped or hook-shaped cross-section in a first plane (i.e., the plane of projection of Fig. 1) that is perpendicular to the first direction X. In particular, as shown more detailed in Fig. 2, the connecting device 32 comprises a first and a second limb 34, 36 aligned in parallel to each other, and connected by a base part 38, which is aligned substantially perpendicularly to first and second limbs 34, 36 when observed in the first plane. The first limb 34, by which the connecting device 32 is attached to the supporting structure 30, and which stands in direct contact therewith, extends farther from the base part 38 than the second limb 36. The first and second limbs 34, 36 as well as the base part 38 are substantially flat and extend in the first direction X. In this example, the connecting device 32 is formed as an aluminum profile extruded in the first direction X.
In Fig. 1, the floor panel 12 is shown in its mounted state in which it is mounted to the supporting structure 30 by means of the connecting device. In this situation, the first direction X is parallel to the central plane ZZ, and a lateral end portion of the central layer 14 of the floor panel 12 is tightly clamped between the first and the second limbs 34, 36 of the connecting device 32. Particularly, the first limb 34 abuts against an outer lateral surface 24 of the floor panel 12, and the second limb 36 penetrates through the second surface 18 into the central layer 14 over a substantial part of the length of the connecting device 32 in the first direction X (cf. Fig. 2).
As illustrated in figures 2 to 5, the central layer 14 has a honeycomb structured core with a plurality of cells delimited by substantially parallel cell walls 26, each crossing the central plane ZZ. Herein, each cell wall 26 is aligned perpendicularly to the central plane ZZ. Accordingly, the honeycomb structure is configured to hinder compression of the floor panel 12 perpendicularly to the central plane ZZ. The cells are preferably hexagonal such that each cell is delimited by six cell walls, whereby two neighboring cell walls are arranged at an angle of 120° relative to each other. An insert 40 that is formed complementary to the second limb 36 is positioned in a groove arranged in an area of the central layer proximate to the outer lateral surface 24 of the floor panel 12. In this area, neither the first surface layer 20, nor the second surface layer 22 are formed. Yet, in an alternative, it is conceivable that the second surface layer 22 covers an inner surface of the groove. Both, the insert 40 and the groove extend in parallel to the outer lateral surface 24 in the first direction X. The insert 40 is fixedly secured to the central layer 14 in the groove.
Furthermore, as shown in figure 3, a seat rail 42 is arranged such as to penetrate through the first surface layer 20 and into the central layer 14. Alternatively, it is conceivable that the seat rail 42 is at least partially embedded in the first surface layer 20 without penetrating into the central layer 14. In particular, the seat rail 42 may be in contact with the first surface 16 of the central layer 14 such as to cover some of the cells at the first surface of the central layer. In this case, loads acting vertically on a seat mounted to the seat rail 42 are directly transmitted to the central layer, so that wear of the first surface layer is reduced.

Both, the first and the second surface layers 20, 22, comprise a peripheral layer 44 and an intermediate layer 46, wherein the intermediate layer 46 is arranged between the peripheral layer 44 and the central layer 14, such as to connect the peripheral layer 44 and the intermediate layer 46. The peripheral layer is formed of a composite material, e.g. fibre reinforced plastics such as carbon-fibre reinforced plastics or glass-fibre reinforced plastics, and the intermediate layer is formed of a hard foam material, such as hard foam admitted for aircraft. Thus, the peripheral layer 44 is formed more rigid than the intermediate layer 46 such as to prevent damage of the underlying intermediate and central layers 46, 14, whereas the intermediate layer 46 is rather more elastic than the peripheral layer 42 in order to damp any impulses, e.g., of passengers walking on the floor panels.

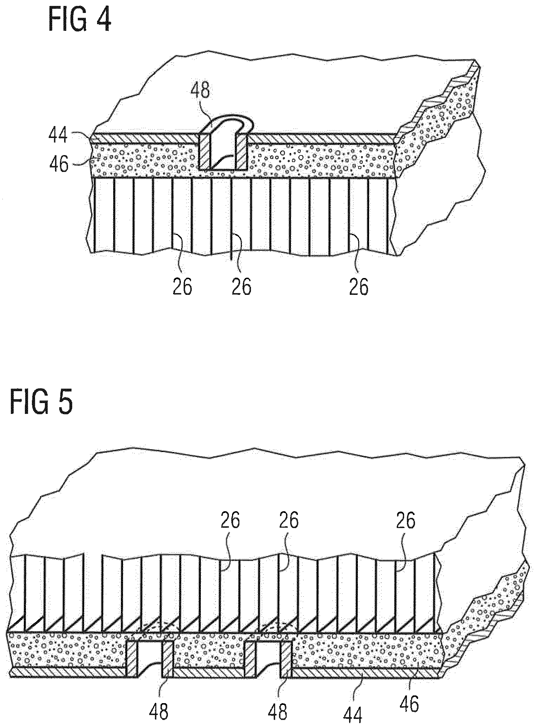

Spaced apart from the seat rail 42, a plurality of threaded bushings 48 are distributed over the floor panel 12, and embedded in the first and second surface layers 20, 22, particularly in the peripheral layer 44 and the intermediate layer 46. Similarly to the seat rail 42, each of the bushings 48 may, in an alternative, extend into the central layer 14. Each threaded bushing 48 penetrates the respective peripheral layer 44 and extends essentially perpendicularly to the first/second surface 14, 16. Threaded bushings 48 arranged at the first surface layer 20 as shown in Fig. 4 are provided for attaching to the floor panel interior components of the transportation means, e.g. aircraft monuments or the like, while threaded bushings 48 arranged at the second surface layer 22 as shown in Fig. 5 serve for mounting system components, such as electrical cables or liquid carrying lines, to the floor panel 12.

Referring back to figure 1, the supporting structure 30 comprises four traverses 52. All traverses 52 are arranged in contact with the connecting device 32 at a side of the connecting device 32 opposite of the floor panel 12. In particular, each of the traverses 52 abuts against a surface of the first limb 34 of the connecting device 32 that is opposite of the surface of the first limb 34 facing the floor panel 12 and the second limb 36. Each of the traverses 52 is rigidly connected to the connecting device 32 and extends in a second direction Y that is perpendicular to the first direction X and, in the situation shown in figures 1 to 5 in which the floor panel 12 is in its mounted state, parallel to the central plane ZZ. Herein, the central plane ZZ crosses each of the traverses 52. However, it is conceivable that the central plane ZZ merely extends in parallel to the second direction Y and the traverses 52. Moreover, the traverses 52 are arranged offset relative to the floor panel 12 in the second direction Y, whereas, in a further alternative, at least one of the traverses 52 may be arranged such as to overlap a minor part of the floor panel 12.

Moreover, the floor assembly 10 comprises a plurality of struts 53 having an S-shaped cross section in a second plane that is parallel to the first and the second direction, X, Y. At its opposite ends 56, 58 in the first direction X, each strut 53 is rigidly fixed to two neighboring traverses 52, respectively, positioned on the same side of the floor panel 12 in the second direction Y.

For additional stability, the supporting structure comprises a plurality of support rods 54 extending in a third direction Z which is perpendicular to the first and second direction X, Y, and, thus, when the floor panel is in its mounted state, also perpendicular to the central plane ZZ. In particular, each support rod 54 is fixed to and extends from the connecting device in the third direction Z. Furthermore, each support rod 54 is spaced apart from the floor panel 12.

The dimensions of the central layer 14 as well as the first surface layer and the second surface layer 20, 22 are about 5 cm and 2.5 cm, respectively, in the third direction Z. The floor panel 12, in its mounted state shown in figures 1 to 5, is about 50 cm long in the first direction X and about 3 m wide in the second direction Y.

A transportation means section 80, herein a section of an aircraft, comprises the floor assembly 10 and two structural parts 82 in the form of ribs of an aircraft fuselage extending in parallel to each other, and each having a substantially C-shaped cross section in a plane that is perpendicular to the first direction X. In the mounted state, the length of the floor panel 12 in the first direction X essentially corresponds to the distance between the structural parts 82 in the first direction X. In an alternative, in the same situation, the length of the floor panel 12 in the first direction X is essentially n times the distance between the structural parts 82 in the first direction X, wherein n is a natural number larger than 0. The length of the floor panel 12 in the first direction X may, moreover, be at most the length of the transportation means section in the first direction X.

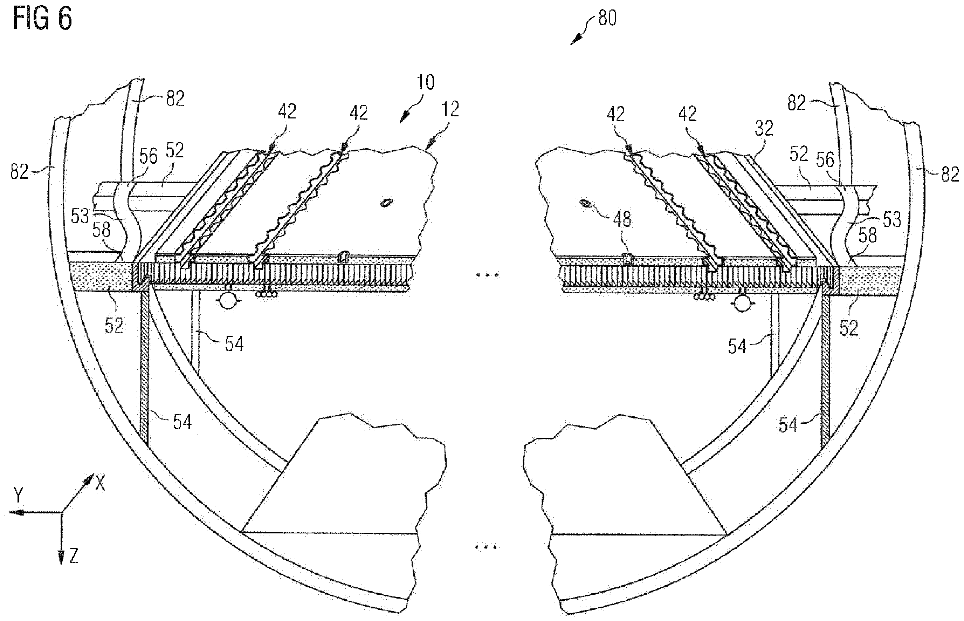

As shown in figure 6, the transportation means section 80 is essentially free of any cross-beams overlapping with the floor panel 12 when viewed in the third direction Z. In other words, when the floor panel 12 is in its mounted state, it is suspended to the structural parts 82 only by the supporting structure 30 and the connecting device 32.

## Claims

1. A floor assembly (10) for a transportation means, comprising:
- a flat floor panel (12) having a central layer (14) through the entirety of which a central plane (ZZ) of the central layer (14) extends, which central layer (14) connects a first surface layer (20) arranged on a first surface (16) of the central layer (14) with a second surface layer (22) arranged on a second surface (18) of the central layer (14);
- a supporting structure (30) adapted to be fixed to one or more structural parts of the transportation means; and
- an elongate connecting device (32) extending in a first direction (X), which connecting device (32) is fixed to the supporting structure (30) and adapted for detachably mounting the floor panel (12) to the supporting structure (30), wherein, when the floor panel (12) is in its mounted state in which it is mounted to the supporting structure (30), the first direction (X) is parallel to the central plane (ZZ) and the connecting device (32) abuts at least in sections against an outer lateral surface of the floor panel (12);
**characterised in that** said connecting device (32) stands in engagement with the central layer (14) of the floor panel (12).

2. The floor assembly according to claim 1, wherein the connecting device (32) has at least in sections a substantially J-shaped cross-section in a first plane that is perpendicular to the first direction (X).

3. The floor assembly according to one of the preceding claims,
wherein the connecting device (32) comprises a first limb (34) and a second limb (36) extending in parallel to the first limb (34), the first and the second limb (36) being connected by a base part (38) which extends perpendicularly to the first and the second limb (36),
wherein, when the floor panel (12) is in its mounted state, the first limb (34) abuts against at least a portion of the outer lateral surface of the floor panel (12), and the second limb (36) engages into the central layer (14).

4. The floor assembly according to one of the preceding claims,
wherein the central layer (14) has a honeycomb structured core having a plurality of cells delimited by parallel cell walls (26), each of the cell walls (26) crossing the central plane (ZZ),
wherein an elongate insert (40) is positioned in an elongate groove extending through the second surface into the central layer (14), which insert (40) extends in parallel to the outer lateral surface.

5. The floor assembly according to one of the preceding claims, further comprising a seat rail (42) which is arranged such as to penetrate through the first surface layer (20) and into the central layer (14).

6. The floor assembly according to one of the preceding claims, wherein the first and/or the second surface layer comprises a peripheral layer (44) formed of a composite material and an intermediate layer (46) formed of a foam material and arranged between the peripheral layer (44) and the central layer (14).

7. The floor assembly according to one of the preceding claims, wherein one or more threaded bushings (48) are formed in the first and/or in the second surface layer (20, 22), wherein each of the threaded bushings (48) extends essentially perpendicularly to the first and/or the second surface of the central layer (14).

8. The floor assembly according to one of the preceding claims,
wherein the supporting structure (30) comprises a first traverse and a second traverse, each formed separate from the floor panel (12), rigidly fixed to the connecting device (32), and extending in a second direction (Y) which is perpendicular to the first direction (X),
wherein, when the floor panel (12) is in its mounted state, the central plane (ZZ) of the central layer (14) extends in parallel to the second direction (Y) and the first traverse and the second traverse are arranged offset relative to the floor panel (12) in the second direction (Y).

9. The floor assembly according to claim 8, further comprising a strut (53) having an S-shaped cross-section in a second plane that is parallel to the first and the second direction (X, Y), wherein, at its opposite ends in the first direction (X), the strut (53) is rigidly fixed to the first and to the second traverse, respectively.

10. The floor assembly according to one of the preceding claims,
wherein the supporting structure (30) comprises at least one support rod (54) extending in a third direction (Z), which support rod is fixed to the connecting device (32) and adapted to be fixed to the structural part, and
wherein, when the floor panel (12) is in its mounted state, the third direction is perpendicular to the central plane (ZZ) of the central layer (14), and the support rod is arranged offset relative to the floor panel (12) in the third direction.

11. The floor assembly according to one of the preceding claims, wherein the central layer (14) of the floor panel (12) has a thickness of at least 4.5 cm, and/or wherein the first surface layer (20) and/or the second surface layer (22) have a thickness of at most 3 cm.

12. The floor assembly according to one of the preceding claims, wherein the floor panel (12), in its mounted state, has a length in the first direction (X) of at least 45 cm, and/or a width in the second direction (Y) of at least 1.5 m.

13. A transportation means section (80), particularly an aircraft section or a train section, comprising:
- a floor assembly (10) according to one of the preceding claims; and
- a plurality of structural parts spaced apart relative to each other in the first direction (X),
wherein each structural part has a curved cross-section in a plane that is perpendicular to the first direction (X),
wherein the supporting structure (30) is attached to each of the structural parts, and
wherein, when the floor panel (12) is in its mounted state, the length of the floor panel (12) in the first direction (X) corresponds at least to the distance between two neighboring structural parts in the first direction (X).

14. The transportation means section according to claim 13, wherein, when the floor panel (12) is in its mounted state, it is suspended to the structural part only by the supporting structure (30) and the connecting device (32).

15. A transportation means, particularly an aircraft or a train, comprising a transportation means section (80) according to claim 13 or 14 and/or a floor assembly (10) according to one of claims 1 to 12.

## Patentansprüche

1. Bodenanordnung (10) für ein Transportmittel, das umfasst:
- ein flaches Bodenpaneel (12) mit einer zentralen Schicht (14), durch dessen Gesamtheit sich eine zentrale Ebene (ZZ) der zentralen Schicht (14) erstreckt, wobei die zentrale Schicht (14) eine auf einer ersten Oberfläche (16) der zentralen Schicht (14) angeordnete erste Oberflächenschicht (20) mit einer auf einer zweiten Oberfläche (18) der zentralen Schicht (14) angeordneten zweiten Oberflächenschicht (22) verbindet;
- eine Stützstruktur (30), die dazu eingerichtet ist, an einem oder mehreren strukturellen Teil(en) des Transportmittels befestigt zu werden; und
- eine langgestreckte Verbindungseinrichtung (32), die sich in einer ersten Richtung (X) erstreckt, wobei die Verbindungseinrichtung (32) an der Stützstruktur (30) befestigt und dazu eingerichtet ist, das Bodenpaneel (12) lösbar an der Stützstruktur (30) befestigen, wobei, wenn das Bodenpaneel (12) sich in seinem montierten Zustand befindet, in dem es an der Stützstruktur (30) montiert ist, die erste Richtung (X) parallel zu der zentralen Ebene (ZZ) ist und die Verbindungseinrichtung (32) zumindest abschnittsweise an einer äußeren Seitenfläche des Bodenpaneels (12) anliegt,
**dadurch gekennzeichnet, dass** die Verbindungseinrichtung (32) mit der zentralen Schicht (14) des Bodenpaneels (12) in Eingriff steht.

2. Bodenanordnung gemäß Anspruch 1,
wobei die Verbindungseinrichtung (32) zumindest abschnittsweise einen im Wesentlichen J-förmigen Querschnitt in einer ersten Ebene hat, die senkrecht zu der ersten Richtung (X) ist.

3. Bodenanordnung gemäß einem der vorhergehenden Ansprüche,
wobei die Verbindungseinrichtung (32) einen ersten Schenkel (34) und einen sich parallel zu dem ersten Schenkel (34) zweiten Schenkel (36) umfasst, wobei der erste und der zweite Schenkel (36) durch ein Basisteil (38) verbunden sind, das sich senkrecht zu dem ersten und dem zweiten Schenkel (36) erstreckt,
wobei, wenn das Bodenpaneel (12) sich in seinem montierten Zustand befindet, der erste Schenkel (34) an zumindest einem Abschnitt der äußeren Seitenfläche des Bodenpaneels (12) anliegt und der zweite Schenkel (36) in die zentrale Schicht (14) eingreift.

4. Bodenanordnung gemäß einem der vorhergehenden Ansprüche 3,
wobei die zentrale Schicht (14) einen Kern mit einer Honigwabenstruktur mit einer Mehrzahl von durch parallele Zellwände (26) begrenzten Zellen umfasst, wobei jede Zellwand (26) die zentrale Ebene (ZZ) kreuzt,
wobei ein langgestreckter Einsatz (40) in einer langgestreckten Nut positioniert ist, die sich durch die zweite Oberfläche in die zentrale Schicht (14) erstreckt, wobei sich der Einsatz (40) parallel zu der äußeren Seitenfläche erstreckt.

5. Bodenanordnung gemäß einem der vorhergehenden Ansprüche,
die ferner eine Sitzschiene (42) umfasst, die so angeordnet ist, dass sie durch die erste Oberflächenschicht (20) und in die zentrale Schicht (14) dringt.

6. Bodenanordnung gemäß einem der vorhergehenden Ansprüche,
wobei die erste und/oder die zweite Oberflächenschicht eine aus einem Verbundmaterial ausgebildete periphere Schicht (44) und eine Zwischenschicht (46) umfasst/umfassen, die aus einem Schaumaterial ausgebildet und zwischen der peripheren Schicht (44) und der zentralen Schicht (14) angeordnet ist.

7. Bodenanordnung gemäß einem der vorhergehenden Ansprüche,
wobei eine oder mehrere mit einem Gewinde versehene Hülse(n) (48) in der ersten und/oder in der zweiten Oberflächenschicht (20, 22) ausgebildet sind, wobei sich jede der mit einem Gewinde versehenen Hülsen (48) im Wesentlichen senkrecht zu der ersten und/oder der zweiten Oberfläche der zentralen Schicht (14) erstreckt.

8. Bodenanordnung gemäß einem der vorhergehenden Ansprüche,
wobei die Stützstruktur (30) eine erste Traverse und eine zweite Traverse umfasst, die jeweils separat von dem Bodenpaneel (12) ausgebildet sind, starr an der Verbindungseinrichtung (32) befestigt sind und sich in einer zweiten Richtung (Y) erstrecken, die senkrecht zu der ersten Richtung (X) ist,
wobei, wenn sich das Bodenpaneel (12) in seinem montierten Zustand befindet, die zentrale Ebene (ZZ) der zentralen Schicht (14) sich parallel zu der zweiten Richtung (Y) erstreckt und die erste Traverse und die zweite Traverse relativ zu dem Bodenpaneel (12) in der zweiten Richtung (Y) versetzt angeordnet sind.

9. Bodenanordnung gemäß Anspruch 8,
die ferner eine Strebe (53) umfasst, welche in einer zweiten Ebene, die parallel zu der ersten und der zweiten Richtung (X, Y) ist, einen S-förmigen Querschnitt hat, wobei die Strebe (53) an ihren entgegengesetzten Enden in der ersten Richtung (X) starr an der ersten bzw. der zweiten Traverse befestigt ist.

10. Bodenanordnung gemäß einem der vorhergehenden Ansprüche,
wobei die Stützstruktur (30) mindestens eine Stützstange (54) umfasst, die sich in einer dritten Richtung (Z) erstreckt, wobei die Stützstange an der Verbindungseinrichtung (32) befestigt und dazu eingerichtet ist, an den strukturellen Teilen befestigt zu werden, und
wobei, wenn sich das Bodenpaneel (12) in seinem montierten Zustand befindet, die dritte Richtung senkrecht zu der zentralen Ebene (ZZ) der zentralen Schicht (14) ist und die Stützstange relativ zu dem Bodenpaneel (12) in der dritten Richtung versetzt angeordnet ist.

11. Bodenanordnung gemäß einem der vorhergehenden Ansprüche,
wobei die zentrale Schicht (14) des Bodenpaneels (12) eine Dicke von mindestens 4,5 cm hat und/oder wobei die erste Oberflächenschicht (20) und/oder die zweite Oberflächenschicht (22) eine Dicke von höchstens 3 cm hat/haben.

12. Bodenanordnung gemäß einem der vorhergehenden Ansprüche,
wobei das Bodenpaneel (12) in seinem montierten Zustand eine Länge in der ersten Richtung (X) von mindestens 45 cm und/oder eine Breite in der zweiten Richtung (Y) von mindestens 1,5 m hat.

13. Transportmittelabschnitt (80), insbesondere Flugzeugabschnitt oder Zugabschnitt, der umfasst:
- eine Bodenanordnung (10) nach einem der vorhergehenden Ansprüche; und
- eine Mehrzahl von strukturellen Teilen, die in der ersten Richtung (X) relativ voneinander beabstandet sind,
wobei jedes strukturelle Teil in einer Ebene, die senkrecht zu der ersten Richtung (X) ist, einen gekrümmten Querschnitt hat,
wobei die Stützstruktur (30) an jedem der strukturellen Teile befestigt ist und
wobei, wenn sich das Bodenpaneel (12) in seinem montierten Zustand befindet, die Länge des Bodenpaneels (12) in der ersten Richtung (X) mindestens dem Abstand zwischen zwei zueinander benachbarten strukturellen Teilen in der ersten Richtung (X) entspricht.

14. Transportmittelabschnitt nach Anspruch 13, wobei, wenn sich das Bodenpaneel (12) in seinem montierten Zustand befindet, es nur durch die Stützstruktur (30) und die Verbindungseinrichtung (32) hängend an dem strukturellen Teil gelagert ist.

15. Transportmittel, insbesondere Flugzeug oder Zug, das einen Transportmittelabschnitt (80) nach Anspruch 13 oder 14 und/oder eine Bodenanordnung (10) nach einem der Ansprüche 1 bis 12 umfasst.

## Revendications

1. Ensemble (10) de plancher pour un moyen de transport, comprenant :
- un panneau (12) de plancher plat ayant une couche centrale (14) à travers la totalité de laquelle un plan central (ZZ) de la couche centrale (14) s'étend, laquelle couche centrale (14) connecte une première couche (20) de surface agencée sur une première surface (16) de la couche centrale (14) avec une deuxième couche (22) de surface agencée sur une deuxième surface (18) de la couche centrale (14) ;
- une structure support (30) adaptée à être fixée sur une ou plusieurs parties structurelles du moyen de transport ; et
- un dispositif (32) de connexion allongé s'étendant dans un premier sens (X), lequel dispositif (32) de connexion est fixé à la structure support (30) et adapté à monter de façon détachable le panneau (12) de plancher sur la structure support (30),
dans lequel, lorsque le panneau (12) de plancher est dans son état monté dans lequel il est monté sur la structure support (30), le premier sens (X) est parallèle au plan central (ZZ) et le dispositif (32) de connexion vient buter au moins dans des sections contre une surface latérale extérieure du panneau (12) de plancher ;
**caractérisé en ce que** ledit dispositif (32) de connexion se trouve en engagement avec la couche centrale (14) du panneau (12) de plancher.

2. Ensemble de plancher selon la revendication 1, dans lequel le dispositif (32) de connexion a au moins dans des sections une section transversale sensiblement en forme de J dans un premier plan qui est perpendiculaire au premier sens (X).

3. Ensemble de plancher selon l'une des revendications précédentes,
dans lequel le dispositif (32) de connexion comprend une première branche (34) et une deuxième branche (36) s'étendant en parallèle à la première branche (34), la première et la deuxième branche (36) étant connectées par une partie de base (38) qui s'étend perpendiculairement à la première et la deuxième branche (36),
dans lequel, lorsque le panneau (12) de plancher est dans son état monté, la première branche (34) vient buter contre au moins une partie de la surface latérale extérieure du panneau (12) de plancher, et la deuxième branche (36) s'engage dans la couche centrale (14).

4. Ensemble de plancher selon l'une des revendications précédentes,
dans lequel la couche centrale (14) a un coeur structuré en nid d'abeilles ayant une pluralité de cellules délimitées par des parois (26) de cellules parallèles, chacune des parois (26) de cellules croisant le plan central (ZZ),
dans lequel un insert allongé (40) est positionné dans une rainure allongée s'étendant à travers la deuxième surface dans la couche centrale (14), lequel insert (40) s'étend en parallèle à la surface latérale extérieure.

5. Ensemble de plancher selon l'une des revendications précédentes, comprenant en outre un rail (42) de siège qui est agencé de manière à pénétrer à travers la première couche (20) de surface et jusque dans la couche centrale (14).

6. Ensemble de plancher selon l'une des revendications précédentes, dans lequel la première et/ou la deuxième couche de surface comprennent/comprend une couche périphérique (44) constituée d'un matériau composite et une couche intermédiaire (46) constituée d'un matériau de mousse et agencée entre la couche périphérique (44) et la couche centrale (14).

7. Ensemble de plancher selon l'une des revendications précédentes, dans lequel une ou plusieurs douilles filetées (48) sont formées dans la première et/ou dans la deuxième couche de surface (20, 22), dans lequel chacune des douilles filetées (48) s'étend essentiellement perpendiculairement à la première et/ou la deuxième couche de surface de la couche centrale (14).

8. Ensemble de plancher selon l'une des revendications précédentes,
dans lequel la structure support (30) comprend une première traverse et une deuxième traverse, chacune formée séparée du panneau (12) de plancher, fixée rigidement au dispositif (32) de connexion, et s'étendant dans un deuxième sens (Y) qui est perpendiculaire au premier sens (X),
dans lequel, lorsque le panneau (12) de plancher est dans son état monté, le plan centrale (ZZ) de la couche centrale (14) s'étend en parallèle au deuxième sens (Y) et la première traverse et la deuxième traverse sont agencées décalées par rapport au panneau (12) de plancher dans le deuxième sens (Y).

9. Ensemble de plancher selon la revendication 8, comprenant en outre une plaque d'appui (53) ayant une section transversale en forme de S dans un deuxième plan qui est parallèle au premier et au deuxième sens (X, Y), dans lequel, à ses extrémités opposées dans le premier sens (X), la plaque d'appui (53) est fixée rigidement à la première et à la deuxième traverse, respectivement.

10. Ensemble de plancher selon l'une des revendications précédentes,
dans lequel la structure support (30) comprend au moins une tige support (54) s'étendant dans un troisième sens (Z), laquelle tige support est fixée au dispositif (32) de connexion et adaptée à être fixée à la partie structurelle, et
dans lequel, lorsque le panneau (12) de plancher est dans son état monté, le troisième sens est perpendiculaire au plan central (ZZ) de la couche centrale (14), et la tige support est agencée décalée par rapport au panneau (12) de plancher dans le troisième sens.

11. Ensemble de plancher selon l'une des revendications précédentes, dans lequel la couche centrale (14) du panneau (12) de plancher a une épaisseur d'au moins 4,5 cm, et/ou dans lequel la première couche (20) de surface et/ou la deuxième couche (22) de surface ont/a une épaisseur d'au plus 3 cm.

12. Ensemble de plancher selon l'une des revendications précédentes, dans lequel le panneau (12) de plancher, dans son état monté, a une longueur dans le premier sens (X) d'au moins 45 cm, et/ou une largeur dans le deuxième sens (Y) d'au moins 1,5 m.

13. Section (80) de moyen de transport, particulièrement une section d'aéronef ou une section de train, comprenant :
- un ensemble (10) de plancher selon l'une des revendications précédentes ; et
- une pluralité de parties structurelles espacées les unes par rapport aux autres dans le premier sens (X),
dans laquelle chaque partie structurelle a une section transversale incurvée dans un plan qui est perpendiculaire au premier sens (X),
dans laquelle la structure support (30) est fixée à chacune des parties structurelles, et
dans laquelle, lorsque le panneau (12) de plancher est dans son état monté, la longueur du panneau (12) de plancher dans le premier sens (X) correspond au moins à la distance entre deux parties structurelles voisines dans le premier sens (X).

14. Section de moyen de transport selon la revendication 13, dans laquelle, lorsque le panneau (12) de plancher est dans son état monté, il n'est suspendu à la partie structurelle que par la structure support (30) et le dispositif (32) de connexion.

15. Moyen de transport, particulièrement un aéronef ou un train, comprenant une section (80) de moyen de transport selon la revendication 13 ou 14 et/ou un ensemble (10) de plancher selon l'une des revendications 1 à 12.
